# EUROPEAN PATENT APPLICATION

(11) **EP 2 045 958 A1**
(43) Date of publication of application: **08.04.2009**
(21) Application number: 07721628.1
(22) Date of filing: 09.05.2007
(51) Int. Cl.: H04L 12/04, H04L 12/54

(54) **SYSTEM OF IMPLEMENTING THE INTEGRATION OF DIFFERENT COMPONENTS, NETWORK FORWARDING COMPONENT AND INDEPENDENT APPLICATION COMPONENT**

(30) Priority: 17.10.2006 CN 200610140943; 27.10.2006 CN 200610149862
(71) Applicant: Hangzhou H3C Technologies Co., Ltd., Hangzhou, Zhejiang 310053 (CN)
(72) Inventor: WANG, Xinyuan, Zhejiang 310053 (CN); TANG, Yong, Zhejiang 310053 (CN); WANG, Ju, Zhejiang 310053 (CN); ZHOU, Shunlin, Zhejiang 310053 (CN); CHEN, Guohua, Zhejiang 310053 (CN)
(74) Representative: Tomlinson, Kerry John
(86) International application number: PCT/CN2007/070005
(87) International publication number: WO 2008/046317

(57) **Abstract**

The present invention discloses a system for connecting different components, a Network Forwarding Component NFC and an Independent Application Component IAC. The system includes: a NFC, an IAC and an interface linkage unit, the three of which are integrated in one network device. In the system, the NFC includes a data forwarding unit and a processor; the IAC includes a processor; the interface linkage unit includes a data interface, a management interface and a status information interface. The present invention makes it possible to perform information interaction between the NFC and the IAC integrated in one network device through the configured interfaces.

## Description

### Field of the Invention

The present invention relates to network communication technologies, and more particularly, to a system for connecting different components, a network forwarding component and an independent application component.

### Background of the invention

Along with the continuous development of network technologies, simple packet forwarding utilizing a network device has become a mature technique. However, in face of various services, such as audio and video, which continually emerged in traditional data communication networks, the network device should not only simply forward the packet any longer, it should perform more service processing functions. For example, the network device is required to not only forward packets, but also receive calls and faxes, perform various kinds of pertinent service statistic and charging, perform various kinds of safe-guarding functions and flow monitoring and adjusting, so as to make the network to reach the best performance and allowance status.

In order to implement the various service processing functions during packet forwarding, in the prior art, different network devices for performing different service processing functions respectively are connected, and the various service processing functions are implemented by the different network devices together. Since the different network devices are always produced by different manufacturers, the connection of the different network devices for performing the various service processing functions respectively will lead to a vast device investment, a poor inter-communication performance among the different network devices, inconvenience in management and maintenance, etc.

In Personal Computer (PC) industry fields, along with the development of various industry standards, it currently emerges that PCI cards of a plurality of manufacturers are integrated on one PC through a PCI bus, which enables the PC to be competent for various kinds of service processing.

It can be seen that, in order to implement the various service processing functions during packet forwarding of the network device, solve the poor inter-communication performance among network devices of different manufacturers and reduce the device cost, a component for performing packet forwarding function can be integrated with components for performing other service processing functions into one network device in light of the integration method on the PC. However, when integrating the PCI cards on the PC through the PCI bus in the prior art, inner connection manners and communication schemes of the PCI cards are only applicable inside the PC, and cannot be used in network communications. So, in order to ensure communications among different components in one network device when integrating the component for packet forwarding and the other components for service processing functions into one network device, it becomes a problem that how to connect the different components in the network device and how to transmit various information using the connections.

### Summary of the Invention

A first objective of the present invention is to provide a system for connecting different components, a second objective of the present invention is to provide a network forwarding component, and a third objective of the present invention is to provide an independent application component, so as to ensure that different components integrated in one network device can communicate and cooperate with each other.

In order to achieve the above objectives, the specific solutions in accordance with embodiments of the present invention are as follows:
A system for connecting different components includes: a Network Forwarding Component NFC, an Independent Application Component IAC and an interface linkage component, the three of which are integrated in one network device; wherein the NFC includes a data forwarding unit and a processor, the IAC includes a processor; the interface linkage component includes a data interface, a management interface and a status information interface;
the data interface is configured to send data from the data forwarding unit of the NFC to the processor of the IAC, and send data from the processor of the IAC to the data forwarding unit of the NFC;
the management interface is configured to send management information from the processor of the NFC to the processor of the IAC, and send management information from the processor of the IAC to the processor of the NFC;
the status information interface is configured to send status information from the processor of the NFC to the processor of the IAC, and send status information from the processor of the IAC to the processor of the NFC.

The data interface includes: a first Ethernet controller and a first physical-layer module both of which are integrated in the NFC, a second Ethernet controller and a second physical-layer module both of which are integrated in the IAC; wherein
the first Ethernet controller is configured to receive data from the data forwarding unit of the NFC, convert the data into Ethernet interface data and send the Ethernet interface data to the first physical-layer module, convert Ethernet interface data from the first physical-layer module into processor-side data and send the processor-side data to the data forwarding unit of the NFC;
the first physical-layer module is configured to perform physical-layer processing on the Ethernet interface data from the first Ethernet controller and send the processed Ethernet interface data to the second physical-layer module; perform physical-layer processing on Ethernet interface data from the second physical-layer module and send the processed Ethernet interface data to the first Ethernet controller;
the second physical-layer module is configured to perform physical-layer processing on the Ethernet interface data from the first physical-layer module and send the processed Ethernet interface data to the second Ethernet controller; perform physical-layer processing on Ethernet interface data from the second Ethernet controller and send the processed Ethernet interface data to the first physical-layer module;
the second Ethernet controller is configured to convert the Ethernet interface data from the second physical-layer module into processor-side data and send the processor-side data to the processor of the IAC, convert the data from the processor of the IAC into Ethernet interface data and send the Ethernet interface data to the second physical-layer module.

The management interface includes a first serial interface integrated in the NFC and a second serial interface integrated in the IAC; wherein
the first serial interface is configured to convert parallel management information from the processor of the NFC into serial management information and send the serial management information to the second serial interface, convert serial management information from the second serial interface into parallel management information and send the parallel management information to the processor of the NFC;
the second serial interface is configured to convert parallel management information from the processor of the IAC into the serial management information and send the serial management information to the first serial interface, convert the serial management information from the first serial interface into parallel management information and send the parallel management information to the processor of the IAC.

The serial interface is independent from the processor to which the serial interface is connected; and
the serial interface is connected with the processor through a Local Bus of the processor, receives parallel management information from the processor and send parallel management information to the processor through the Local Bus.

The serial interface is independent from the processor to which the serial interface is connected;
the serial interface is connected with the PCI, PCI-X or PCI Express bus of the processor through a conversion unit; and
the conversion unit is configured to receive the parallel management information from the processor through the PCI, PCI-X or PCI Express bus, convert the format of the parallel management information into a Local Bus format and send the converted parallel management information to the serial interface; convert the format of parallel management information in the Local Bus format from the serial interface into the PCI, PCI-X or PCI Express format and send the converted parallel management information to the PCI, PCI-X or PCI Express bus of the processor.

The serial interface is independent from the processor to which the serial interface is connected, and the system further includes an Ethernet controller between the serial interface and the processor, wherein the serial interface is connected with the processor through the Ethernet controller; and
the processor is configured to send the parallel management information to the serial interface through the Ethernet controller connected with the serial interface, and receive the parallel management information from the serial interface through the Ethernet controller connected with the serial interface.

The serial interface is connected with the Ethernet controller through a logic circuit.

One of the serial interface and the Ethernet controller connected with the serial interface adopts a data/address bus multiplex structure; the other adopts a data/address bus separation structure; and the logic circuit is a multiplexer.

The Ethernet controller connected with the serial interface is one of: an Ethernet controller in the data interface, an Ethernet controller in the status information interface and a newly-added Ethernet controller.

The Ethernet controller connected with the serial interface is the Ethernet controller in the data interface or the status information interface;
the processor is further configured to allocate different address spaces for the serial interface and the Ethernet controller in the Ethernet controller connected with the serial interface, receive and send the data corresponding to the Ethernet controller through the address space allocated for the Ethernet controller, receive and send the parallel management information corresponding to the serial interface through the address space allocated to the serial interface;
the serial interface is configured to receive and send the parallel management information through the address space allocated for the serial interface in the Ethernet controller connected with the serial interface;
the Ethernet controller connected with the serial interface is configured to forward the parallel management information between the processor of the NFC and the serial interface through the address space allocated for the serial interface in the Ethernet controller.

The management interface includes a third Ethernet controller, a third physical-layer module and a first adaptation unit, the three of which are integrated in the NFC and simulate the serial interface; a fourth Ethernet controller, a fourth physical-layer module and a second adaptation unit, the three of which are integrated in the IAC and simulate the serial interface;
the first adaptation unit is configured to convert parallel management information from the processor of the NFC into an Ethernet packet and send the Ethernet packet to the third Ethernet controller, convert an Ethernet packet from the third Ethernet controller into parallel management information and send the parallel management information to the processor of the NFC;
the third Ethernet controller is configured to send the Ethernet packet from the first adaptation unit to the third physical-layer module, and send an Ethernet packet from the third physical-layer module to the first adaptation unit;
the third physical-layer module is configured to perform physical-layer processing on the Ethernet packet from the third Ethernet controller and send the processed Ethernet packet to the fourth physical-layer module, perform physical-layer processing on the Ethernet packet from the fourth physical-layer module and send the processed Ethernet packet to the third Ethernet controller;
the fourth physical-layer module is configured to perform physical-layer processing on the Ethernet packet from the third physical-layer module and send the processed Ethernet packet to the fourth Ethernet controller, perform physical-layer processing on the Ethernet packet from the fourth Ethernet controller and send the processed Ethernet packet to the third physical-layer module;
the fourth Ethernet controller is configured to send the Ethernet packet from the fourth physical-layer module to the second adaptation unit, and send an Ethernet packet from the second adaptation unit to the fourth physical-layer module;
the second adaptation unit is configured to convert parallel management information from the processor of the IAC into an Ethernet packet and send the Ethernet packet to the fourth Ethernet controller, convert the Ethernet packet from the fourth Ethernet controller into parallel management information and send the parallel management information to the processor of the IAC.

The data interface includes a first Ethernet controller and a first physical-layer module both of which are integrated in the NFC, a second Ethernet controller and a second physical-layer module both of which are integrated in the IAC;
the third Ethernet controller and the first Ethernet controller are integrated together or independent from each other;
the fourth Ethernet controller and the second Ethernet controller are integrated together or independent from each other.

The status information interface includes a fifth Ethernet controller and a fifth physical-layer module both of which are integrated in the NFC, a sixth Ethernet controller and a sixth physical-layer module both of which are integrated in the IAC; wherein
the fifth Ethernet controller is configured to receive status information from the processor of the NFC, convert the status information into Ethernet interface data and send the Ethernet interface data to the fifth physical-layer module, convert Ethernet interface data from the fifth physical-layer module into processor-side status information and send the processor-side status information to the processor of the NFC;
the fifth physical-layer module is configured to perform physical-layer processing on the Ethernet interface data from the fifth Ethernet controller and send the processed Ethernet interface data to the sixth physical-layer module, perform physical-layer processing on Ethernet interface data from the sixth physical-layer module and send the processed Ethernet interface data to the fifth Ethernet controller;
the sixth physical-layer module is configured to perform physical-layer processing on the Ethernet interface data from the fifth physical-layer module and send the processed Ethernet interface data to the sixth Ethernet controller, perform physical-layer processing on Ethernet interface data from the sixth Ethernet controller and send the processed Ethernet interface data to the fifth physical-layer module;
the sixth Ethernet controller is configured to receive the Ethernet interface data from the sixth physical-layer module, convert the Ethernet interface data into processor-side status information and send the processor-side status information to the processor of the IAC, convert processor-side status information from the processor of the IAC into Ethernet interface data and send the Ethernet interface data to the sixth physical-layer module.

The sixth Ethernet controller is integrated in the processor of the IAC, or connected with the processor of the IAC through the PCI, PCI-X or PCI Express bus of the processor of the IAC.

The data interface includes a first Ethernet controller and a first physical-layer module both of which are integrated in the NFC, a second Ethernet controller and a second physical-layer module both of which are integrated in the IAC;
the fifth Ethernet controller and the first Ethernet controller are integrated together or independent from each other;
the sixth Ethernet controller and the second Ethernet controller are integrated together or independent from each other.

The fifth Ethernet controller, the fifth physical-layer module, the sixth physical-layer module and the sixth Ethernet controller exchange status information between each other; and the status information includes any one or any combination of: a heartbeat detection packet, a clock synchronization packet, a board restarting notification packet and a system initial value packet.

A Network Forwarding Component NFC includes: a data forwarding unit, a processor, a data interface on the NFC side, a management interface on the NFC side and a status information interface on the NFC side; wherein
the data interface on the NFC side is configured to send data from the data forwarding unit of the NFC to an Independent Application Component IAC, and send data from the IAC to the data forwarding unit of the NFC;
the management interface on the NFC side is configured to send management information from the processor of the NFC to the IAC, and send management information from the IAC to the processor of the NFC;
the status information interface on the NFC side is configured to send status information from the processor of the NFC to the IAC, and send status information from the IAC to the processor of the NFC.

The data interface on the NFC side includes a first Ethernet controller and a first physical-layer module; wherein
the first Ethernet controller is configured to receive the data from the data forwarding unit of the NFC, convert the data into Ethernet interface data and send the Ethernet interface data to the first physical-layer module, convert Ethernet interface data from the first physical-layer module into processor-side data and send the processor-side data to the data forwarding unit of the NFC;
the first physical-layer module is configured to perform physical-layer processing on the Ethernet interface data from the first Ethernet controller and send the processed Ethernet interface data to the IAC, perform physical-layer processing on Ethernet interface data from the IAC and send the processed Ethernet interface data to the first Ethernet controller.

The first Ethernet controller is connected with processor of the NFC through a PCI, PCI-X or PCI Express bus of the processor of the NFC.

The management interface on the NFC side includes a first serial interface, configured to convert parallel management information from the processor of the NFC into serial management information and send the serial management information to the IAC, convert serial management information from the IAC into parallel management information and send the parallel management information to the processor of the NFC.

The management interface on the NFC side includes a third Ethernet controller, a third physical-layer module and a first adaptation unit, the three of which simulate a serial interface; wherein
the first adaptation unit is configured to convert parallel management information from the processor of the NFC into an Ethernet packet and send the Ethernet packet to the third Ethernet controller, convert an Ethernet packet from the third Ethernet controller into parallel management information and send the parallel management information to the processor of the NFC;
the third Ethernet controller is configured to send the Ethernet packet from the first adaptation unit to the third physical-layer module, and send an Ethernet packet from the third physical-layer module to the first adaptation unit;
the third physical-layer module is configured to perform physical-layer processing on the Ethernet packet from the third Ethernet controller and send the processed Ethernet packet to the IAC, perform physical-layer processing on an Ethernet packet from the IAC and send the processed Ethernet packet to the third Ethernet controller.

The management interface on the NFC side includes a first serial interface and an Ethernet controller connected with the first serial interface, the first serial interface is connected with the process through the Ethernet controller, and
the processor is configured to send parallel management information to the first serial interface through the Ethernet controller connected with the first serial interface, and receive parallel management information from the first serial interface through the Ethernet controller connected with the first serial interface.

The status information interface on the NFC side includes a fifth Ethernet controller and a fifth physical-layer module; wherein
the fifth Ethernet controller is configured to receive status information from the processor of the NFC, convert the status information into Ethernet interface data and send the Ethernet interface data to the fifth physical-layer module, convert Ethernet interface data from the fifth physical-layer module into processor-side status information and send the processor-side status information to the processor of the NFC;
the fifth physical-layer module is configured to perform physical-layer processing on the Ethernet interface data from the fifth Ethernet controller and send the processed Ethernet interface data to the IAC, perform physical-layer processing on Ethernet interface data from the IAC and send the processed Ethernet interface data to the fifth Ethernet controller.

An Independent Application Component IAC includes: a processor, a data interface on the IAC side, a management interface on the IAC side and a status information interface on the IAC side; wherein
the data interface on the IAC side is configured to send data from the processor of the IAC to a Network Forwarding Component NFC, and send data from the NFC to the
processor of the IAC;
the management interface on the IAC side is configured to send management information from the processor of the IAC to the NFC, and send management information from the NFC to the processor of the IAC;
the status information interface on the IAC side is configured to send status information from the processor of the IAC to the NFC, and send status information from the NFC to the processor of the IAC.

The data interface on the IAC side includes a third Ethernet controller and a third physical-layer module; wherein
the third Ethernet controller is configured to receive the data from the processor of the IAC, convert the data into Ethernet interface data and send the Ethernet interface data to the third physical-layer module, convert Ethernet interface data from the third physical-layer module into processor-side data and send the processor-side data to the processor of the IAC;
the third physical-layer module is configured to perform physical-layer processing on the Ethernet interface data from the third Ethernet controller and send the processed Ethernet interface data to the NFC, perform physical-layer processing on Ethernet interface data from the NFC and send the processed Ethernet interface data to the third Ethernet controller.

The management interface on the IAC side includes a second serial interface, configured to convert the parallel management information from the processor of the IAC to serial management information and send the serial management information to the NFC, convert the serial management information from the NFC into parallel management information and send the parallel management information to the processor of the IAC.

The management interface on the IAC side includes a second serial interface and an Ethernet controller connected with the second serial interface, the second serial interface is connected with the processor through the Ethernet controller, and
the processor is configured to send the parallel management information to the second serial interface through the Ethernet controller connected with the second serial interface, and receive the parallel management information from the second serial interface through the Ethernet controller.

The management interface on the IAC side includes: a fourth Ethernet controller a fourth physical-layer module and a second adaptation unit, the three of which simulate a serial interface; wherein
the second adaptation unit is configured to convert the parallel management information from the processor of the IAC into an Ethernet packet and send the Ethernet packet to the fourth Ethernet controller, convert an Ethernet packet from the fourth Ethernet controller into parallel management information and send the parallel management information to the processor of the IAC;
the fourth Ethernet controller is configured to send the Ethernet packet from the second adaptation unit to the fourth physical-layer module, and send an Ethernet packet from the fourth physical-layer module to the second adaptation unit;
the fourth physical-layer module is configured to perform physical-layer processing on the Ethernet packet from the fourth Ethernet controller and send the processed Ethernet packet to the NFC, perform physical-layer processing on an Ethernet packet from the NFC and send the processed Ethernet packet to the fourth physical-layer module.

The status information interface on the IAC side includes a sixth Ethernet controller and a sixth physical-layer module; wherein
the sixth Ethernet controller is configured to receive the status information from the processor of the IAC, convert the status information into Ethernet interface data and send the Ethernet interface data to the sixth physical-layer module, convert Ethernet interface data from the sixth physical-layer data into processor-side status information and send the processor-side status information to the processor of the IAC;
the sixth physical-layer module is configured to perform physical-layer processing on the Ethernet interface data from the sixth Ethernet controller and send the processed Ethernet interface data to the NFC, perform physical-layer processing on Ethernet interface data from the NFC and send the processed Ethernet interface data to the sixth Ethernet controller.

The Ethernet controller is integrated in the processor of the IAC, or connected with the processor of the IAC through a PCI, PCI-X or PCI Express bus of the processor of the IAC.

It can be seen that, in the embodiments of the present invention, the NFC and the IAC which are integrated in one network device can perform data interaction, management information interaction and status protocol information interaction respectively through the configured data interface, management interface and status information interface. The embodiments of the present invention also provide specific implementations of the data interface, management interface and status information interface. Therefore, various communication processes under cooperation of the NFC and the IAC are ensured by using the various interfaces provided by the embodiments of the present invention. It is also ensured that the NFC and the IAC can cooperate with each other to implement the packet forwarding function and other supplementary service processing functions, which dramatically improves service quality.

### Brief Description of the Drawings

Fig. 1 is a schematic diagram illustrating an Open Application Architecture OAA system.
Fig.2 is a schematic diagram illustrating the connection of NFC and IAC according to an embodiment of the present invention.
Fig.3 is a schematic diagram illustrating an embodiment of the present invention wherein the data interface is implemented by an Ethernet interface.
Fig.4 is a schematic diagram illustrating an embodiment of the present invention wherein the management interface is implemented only by a serial interface.
Fig.5 is a schematic diagram illustrating an embodiment of the present invention wherein the management interface is implemented by the serial interface and an Ethernet controller.
Fig.6 is a schematic diagram illustrating an embodiment of the present invention wherein the management interface is implemented by an Ethernet interface which simulates the serial interface.
Fig.7 is a schematic diagram illustrating an embodiment of the present invention wherein the status information interface is implemented by the Ethernet interface.

### Detailed Description of the Invention

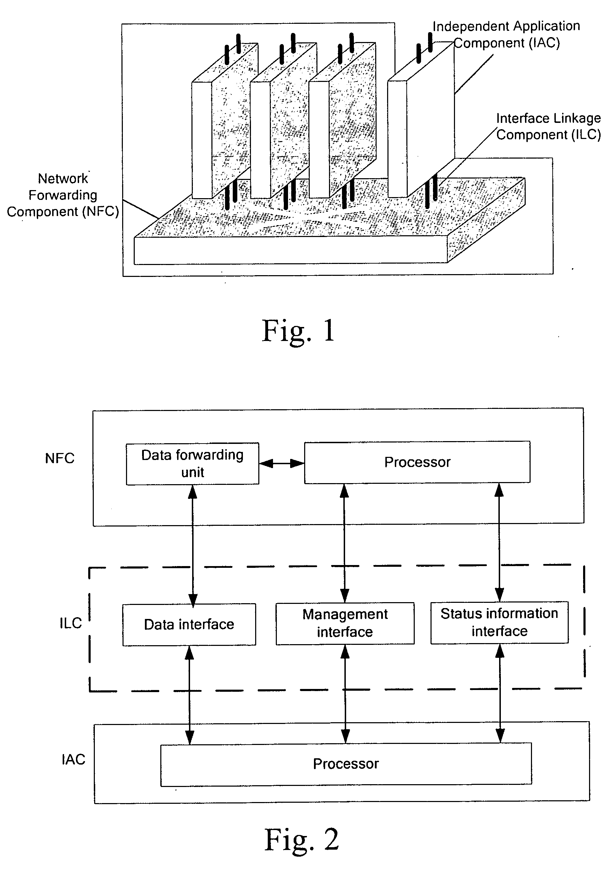

In light of the integration of PCI cards on a PC through a PCI bus so as to implement various service processing functions in the prior art, the embodiments of the present invention provides an open software-hardware architecture, i.e., an Open Application Architecture (OAA). Fig.1 is a schematic diagram illustrating the OAA. Referring to Fig.1, in the OAA system, components of different manufacturers are integrated as a loose-coupled system. The OAA system mainly includes a Network Forwarding Component (NFC), an Independent Application Component (IAC) and an Interface Linkage Component (ILC), wherein the NFC and the IAC are connected through the ILC.

In the OAA system, the NFC is responsible for the basic packet forwarding. It has complete functions of a router or a switch. Generally, the NFC behaves as a main component of the router or switch in the OAA system, including a chassis and a board. The NFC may also be a switch device with a slot. The IAC is responsible for providing various supplementary service processing functions, it generally behaves as a board or a mezzanine card in the OAA system. Since the IAC is equipped with an independent processor, the various service processing functions, e.g. various safe-guarding measures such as pertinence service statistic and charging etc., can be realized through the IAC only by programming the processor. In practical service implementations, in order to realize other service processing functions as well as packet forwarding, it is possible to integrate the NFC and the IAC into one network device through the ILC according to the above OAA idea.

Hereinafter, how the NFC and IAC are connected and how to perform information transmission after the connection are described in detail in the following embodiments of the present invention.

The embodiments of the present invention provide a system for connecting different components NFC and IAC. As shown in Fig.2, the system includes NFC, IAC and the interface linkage component. The NFC includes a data forwarding unit and a processor. The IAC includes a processor. The interface linkage component includes a data interface, a management interface and a status information interface.

The data interface is configured to forward data received from the data forwarding unit of the NFC to the processor of the IAC, and forward data received from the processor of the IAC to the data forwarding unit of the NFC.

The management interface is configured to forward data received from the processor of the NFC to the processor of the IAC, and forward data received from the processor of the IAC to the processor of the NFC.

The status information interface is configured to forward status information received from the processor of the NFC to the processor of the IAC, and forward status information received from the processor of the IAC to the processor of the NFC.

As shown in Fig.2, in the embodiments of the present invention, the NFC may be any kind of network devices capable of packet forwarding, e.g. a switch or a router. If the NFC is the switch, the packet forwarding unit and the processor inside the NFC are generally independent from each other. And the packet forwarding unit is generally implemented by an Application Specific Integrated Circuit (ASIC). If the NFC is the router, the packet forwarding unit of the NFC is generally integrated in the processor of the NFC. It can be seen that, in the NFC of the present invention, the data forwarding unit may be independent from the processor of the NFC, or be integrated in the processor of the NFC.

Refer to Fig.2, firstly, as to the data interface:

In the embodiments of the present invention, the NFC and the IAC exchange data packets through the data interface. Since the IAC performs the pertinent supplementary service processing according to a source address or a destination address of data interacted with the NFC, for example, according to the source address of the data, the IAC performs the charging or determines whether the data is legal, the source address and/or the destination address are needed to be carried in the data when the data interaction between the NFC and the IAC is performed. Thus, the data interface used in the data interaction between the NFC and IAC may be an Ethernet interface.

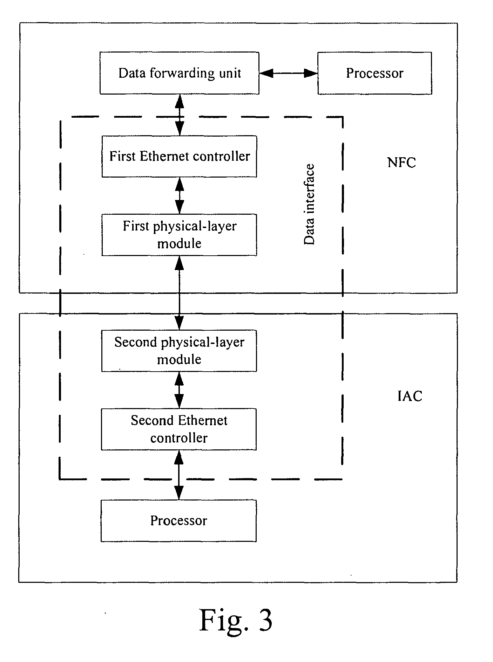

Fig.3 is a schematic diagram illustrating an embodiment of the present invention wherein the data interface is implemented by an Ethernet interface. As shown in Fig.3, if the data interface used for connecting of the NFC and the IAC is the Ethernet interface, the data interface includes: a fist Ethernet controller and a first physical-layer module, both of which are integrated in the NFC; a second Ethernet controller and a second physical-layer module both of which are integrated in the IAC.

The first Ethernet controller is configured to receive data from the data forwarding unit of the NFC, convert the data into Ethernet interface data and send the Ethernet interface data to the first physical-layer module, convert Ethernet interface data received from the first physical-layer module into processor-side data and send the processor-side data to the data forwarding unit of the NFC.

The first physical-layer module is configured to perform physical-layer processing on the Ethernet interface data received from the first Ethernet controller and send the processed Ethernet interface data to the second physical-layer module, perform physical-layer processing on the Ethernet interface data received from the second physical-layer module and send the processed Ethernet interface data to the first Ethernet controller.

The second physical-layer module is configured to perform physical-layer processing on the Ethernet interface data received from the first physical-layer module and send the processed Ethernet interface data to the second Ethernet controller, perform physical-layer processing on the Ethernet interface data received from the second Ethernet controller and send the processed Ethernet interface data to the first physical-layer module.

The second Ethernet controller is configured to convert the Ethernet interface data received from the second physical-layer module to the processor-side data and send the processor-side data to the processor of the IAC, convert data received from the processor of the IAC to Ethernet interface data and send the Ethernet interface data to the second physical-layer module.

As shown in Fig.3, in the NFC, the first physical-layer module may be independent from the first Ethernet controller, i.e., the first physical-layer module and the first Ethernet controller are two independent parts; or, the first physical-layer module may be integrated in the first Ethernet controller. Similarly, the second physical-layer module may be independent from the second Ethernet controller, i.e., the second physical-layer module and the second Ethernet controller are two independent parts; or, the second physical-layer module may be integrated in the second Ethernet controller.

In addition, according to the service processing functions needed to be implemented under the cooperation, it can be deduced that the NFC and the IAC may communicate and cooperate with each other through 4 kinds of cooperation modes including a host mode, mirror mode, re-direction mode and pass-through mode.

The host mode: the IAC acts as a host on a network. It has its own IP address and exists as an endpoint of the network. The NFC only performs simple packet forwarding through the data interface between the NFC and the IAC. The IAC, acting as an initiator and a recipient of the data packet, receives and transmits various kinds of packets. The NFC is actually a gateway of the IAC.

The mirror mode: the mirror mode refers that the NFC sends a copy of the data that satisfy a pre-configured mirror criterion to the IAC, and continues the packet forwarding at the same time. In other words, the NFC sends a copy of the data that satisfy the mirror criterion to the IAC through the data interface between the NFC and the IAC during packet forwarding procedure. The original packet is continued to be forwarded as usual. After receiving the packet, the IAC analyzes and processes the packet according to an inner service process procedure of the IAC.

The re-direction mode: during packet forwarding, according to a pre-configured re-direction condition, the NFC re-directs the packets that satisfy the re-direction condition to the IAC through the data interface between the NFC and the IAC. The IAC analyzes and processes the packet. Processing the packet includes discarding the packet and returning the packet unchanged. If the packet is returned unchanged to the NFC through the data interface between the NFC and the IAC, the NFC proceeds to the processing from where it is interrupted and implements following forwarding process.

The pass-through mode: the IAC analyzes and processes the data packet between an outer network device and the NFC, receives data packet from the NFC and sends data packet to the NFC through the data interface between the NFC and the IAC. From the view of the NFC, outer data seems to arrive at the Ethernet interface of the data interface directly and the IAC seems to be not existed.

As shown in Fig.2, secondly, as to the management interface:

The management interface between the NFC and the IAC is mainly used for transmitting simple management information between the NFC and the IAC. And the management interface is generally used for transmitting the management information before a data connection is established between the NFC and the IAC. For example, just after the NFC and the IAC start up, the management interface transmits configuration information which is used for configuring the cooperation mode of the NFC and the IAC. Specifically, the configuration information may be IP address of the Ethernet controller in the data interface between the NFC and the IAC. The management interface may also be used for transmitting simple management information after the connection is established between the NFC and the IAC. For example, the management interface is used for transmitting updated information of the cooperation mode during data communication between the NFC and the IAC.

In practical service implementations, the NFC and the IAC may provide various kinds of interfaces to outside. For example, the NFC and the IAC may only provide a PCI, PCI-X or PCI Express bus interface to the outside. Or, the NFC and the IAC may also provide the Ethernet interface to the outside. Therefore, the management interface which transmits serial data is implemented according to the characteristics of the interface provided by the NFC and the IAC to the outside. In the embodiments of the present invention, the management interface between the NFC and the IAC may be implemented through following three methods.

Method 1: when both the NFC and the IAC provide a serial interface to the outside, preferably, the management interface between the NFC and the IAC may be implemented only using the serial interface in the embodiments of the present invention.

In the embodiments of the present invention, since it is serial management information that transmitted by the management interface, if both the NFC and the IAC provide the serial interface to the outside, whether the NFC and the IAC still provide other interfaces to the outside, the management interface may be implemented only using the serial interface in a preferred embodiment of the present invention.

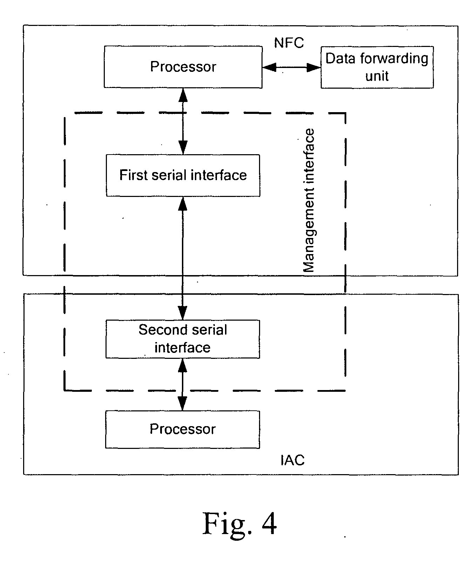

Fig.4 is a schematic diagram illustrating an embodiment of the present invention wherein the management interface is implemented only by the serial interface. As shown in Fig.4, in the Method 1, the management interface includes a first serial interface integrated in the NFC and a second serial interface integrated in the IAC.

The first serial interface is configured to convert parallel management information from the processor of the NFC to serial management information and send the serial management information to the second serial interface, convert serial management information received from the second serial interface to parallel management information and send the parallel management information to the processor of the NFC.

The second serial interface is configured to convert parallel management information received from the processor of the IAC to serial management information and send the serial management information to the first serial interface, convert the serial management information received from the first serial interface to parallel management information and the send the parallel management information to the processor of the IAC.

Referring to Fig.4, in the NFC, the first serial interface may be independent from the processor of the NFC or be integrated in the processor of the NFC. Similarly, in the IAC, the second serial interface may be independent from the processor of the IAC or be integrated in the processor of the IAC.

Since the serial interface can be connected with a Local Bus, when the first serial interface is independent from the processor of the NFC, the connection and the management information interaction between the first serial interface and the processor of the NFC may include direct-connection or indirect-connection, which are described in detail as follows.

Direct-connection: the first serial interface is connected with the processor of the NFC through the Local Bus of the processor of the NFC, receives parallel management information from the processor of the NFC through the Local Bus and sends parallel management information to the processor of the NFC through the Local Bus.

Or, indirect-connection: the first serial interface is connected with the PCI, PCI-X or PCI Express bus of the processor of the NFC through a conversion unit. The conversion unit is configured to received parallel management information sent by the processor of the NFC through the PCI, PCI-X or PCI Express bus, convert the format of parallel management information into the Local Bus format and send the converted parallel management information to the first serial interface, convert the format of the parallel management information in the Local Bus format received from the first serial interface into the PCI, PCI-X or PCI Express format and send the converted parallel management information to the processor of the NFC. The conversion unit may be an apparatus capable of converting data between the PCI, PCI-X or PCI Express bus format and the Local Bus format, such as PCI9030 produced by PLX.

It should be noted that, when the second serial interface is independent from the processor of the IAC, the connection and management information interaction between the second serial interface and the processor of the IAC are similarly to the connection and management information interaction between the first serial interface and the processor of the NFC described above.

Method 2: when both the NFC and the IAC provide a processor bus interface such as the PCI, PCI-X or PCI Express bus interface, in the embodiments of the present invention, the management interface may be implemented by the serial interface and an Ethernet controller.

In the Method 2, both the NFC and the IAC provide the processor bus interface. Therefore, the management interface may be implemented by the Ethernet controller which can be connected with the processor bus interface. And since it is the serial management information that transmitted by the management interface , the Ethernet controller which is capable of implementing Ethernet data transmission is not enough to implement the management interface. In the case, the Ethernet controller may be connected with the serial interface. In other words, it is possible to utilize the serial interface and the Ethernet controller to implement the management interface. Preferably, the Method 2 is applicable when the NFC and the IAC only provide the processor bus interface instead of the serial interface to the outside.

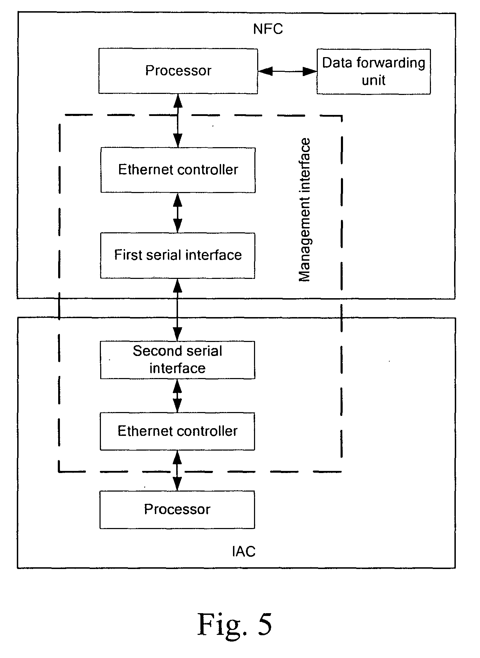

Fig.5 is a schematic diagram illustrating an embodiment of the present invention wherein the management interface is implemented by the serial interface and the Ethernet controller. Referring to Fig.5, in the Method 2, the management interface includes: a first serial interface integrated in the NFC, the Ethernet controller connected with the first serial interface and the processor of the NFC, a second serial interface integrated in the IAC, and the Ethernet controller connected with the second serial interface and the processor of the IAC.

The processor of the NFC is configured to send parallel management information to the first serial interface though the Ethernet controller connected with the first serial interface, receive parallel management information from the first serial interface through the Ethernet controller connected with the first serial interface.

The first serial interface is configured to convert the received parallel management information into serial management information and send the serial management information to the second serial interface, convert the serial management information received from the second serial interface into parallel management information and send the parallel management information to the processor of the NFC through the Ethernet controller connected with the first serial interface and the processor of the NFC.

The processor of the IAC is configured to send parallel management information to the second serial interface through the Ethernet controller connected with the second serial interface, receive parallel management information from the second serial interface through the Ethernet connected with the second serial interface.

The second serial interface is configured to convert the received parallel management information into serial management information and send the serial management information to the first serial interface, convert the serial management information sent by the first serial interface into parallel management information and send the parallel management information to the processor of the IAC through the Ethernet controller respectively connected with the second serial interface and the processor of the IAC.

As shown in Fig.5, taken the first serial interface as an example, when the Method 2 is adopted, the first serial interface should be connected with the processor of the NFC through the Ethernet controller such as an Ethernet controller 1. Thus, it is required that the first serial interface can be connected with Ethernet controller 1. In practical service implementations, according to the implementations of the first serial interface and the Ethernet controller 1, the first serial interface may be impossible to be connected with the Ethernet controller 1 directly. Under the situation, a logic circuit Logic1 is configured between the first serial interface and the Ethernet controller 1, and the connection and information interaction between the first serial interface and the Ethernet controller 1 are implemented through the logic circuit Logic1. For example, if one of the first serial interface and Ethernet controller 1 adopts a data/address bus multiplex structure, and the other adopts a data/address bus separation structure, the first serial interface may be connected with Ethernet controller 1 through the logic circuit Logic1 which acts as a multiplexer, thereby implement management information interaction with the processor of the NFC through the Ethernet controller 1.

It should be noted that, when the second serial interface is connected with the processor of the IAC through the Ethernet controller such as an Ethernet controller 2, if the second serial interface can not connect with the Ethernet controller 2 directly, the second serial interface may connect with the Ethernet controller 2 through a logic circuit Logic2. The specific implementation is same with the process of the first serial interface connecting with the Ethernet controller 1 through the logic circuit Logic1.

It should be noted that, in the embodiments of the present invention, the Ethernet controller connected between the serial interface and the processor may be a newly-added Ethernet controller for implementing the management interface. Alternatively, if the data interface and the status information interface include the Ethernet controller, the Ethernet controller connected between the serial interface and the processor may also be the Ethernet controller included in the data interface or the status information interface, i.e., the Ethernet controller connected between the serial interface and processor is multiplexed with the Ethernet controller in the data interface or the status information interface.

If the Ethernet controller connected between the serial interface and the processor is multiplexed with another Ethernet controller, such as the first Ethernet controller in the data interface, the multiplexed first Ethernet controller should perform multiple kinds of transmissions at the same time, i.e., transmit data to perform functions of the data interface and transmit management information to perform the functions of the management interface. Thus, in order to ensure that the interactions of the data and the management information between the NFC and the IAC are not confused, different address spaces are employed in the embodiments of the present invention to differentiate different transmissions.

Taking the NFC as an example, the processor of the NFC allocates different address spaces in the first Ethernet controller for the first serial interface and the first Ethernet controller. The parallel management information corresponding to the first serial interface, i.e., the management information sent by the processor of the NFC to the first serial interface and the parallel management information sent by the first serial interface to the processor of the NFC, are stored in the address space allocated for the first serial interface by the first Ethernet controller. The first Ethernet controller implements the forwarding of the management information between the processor of the NFC and the first serial interface according to the parallel management information stored in the address space allocated for the first serial interface. In addition, the first Ethernet controller receives and transmits data corresponding to itself, i.e., the data need to be interacted between the NFC and IAC through the data interface, through the address space allocated by itself.

In the IAC, if the Ethernet controller connected between the second serial interface and the processor of the IAC is multiplexed with another Ethernet controller, such as the second Ethernet controller in the data interface, the process of implementing differentiated transmissions using different address spaces are similar with that in the NFC.

Method 3: when both the NFC and the IAC provide the Ethernet interface to the outside, in the embodiments of the present invention, the management interface may be implemented by the Ethernet interface which simulates the serial interface.

In the Method 3, both the NFC and the IAC provide the Ethernet interface to the outside. Thus, the management interface can be implemented by the Ethernet interface. And since it is the serial management information that transmitted by the management interface, the Ethernet interface capable of implementing Ethernet data transmission is not enough to implement the management interface. Under the situation, it is possible to use the Ethernet interface to simulate the serial interface. In other words, the management interface may be implemented by using the Ethernet interface which simulates the serial interface. Preferably, the Method 3 is applicable when the NFC and the IAC only provide the Ethernet interface instead of the serial interface to the outside.

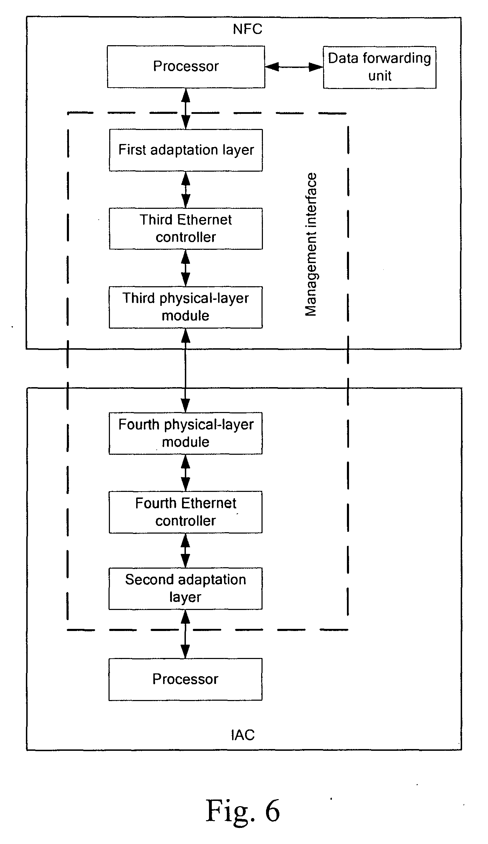

Fig.6 is a schematic diagram illustrating an embodiment of the present invention wherein the management interface is implemented by the Ethernet interface which simulates the serial interface. As shown in Fig.6, in the Method 3, the management interface may include: a third Ethernet controller, a third physical-layer module, a fist adaptation unit, the three of which are integrated in the NFC and simulate the serial interface; a fourth Ethernet controller, a fourth physical-layer module and a second adaptation unit, the three of which are integrated in the IAC and simulate the serial interface.

The first adaptation unit is configured to convert the parallel management information from the processor of the NFC into an Ethernet packet and send the Ethernet packet to the third Ethernet controller, convert the Ethernet packet from the third Ethernet controller into parallel management information and send the parallel management information to the processor of the NFC.

The third Ethernet controller is configured to send the Ethernet packet from the first adaptation unit to the third physical-layer module, and send an Ethernet packet from the third physical-layer module to the first adaptation unit.

The third physical-layer module is configured to perform physical-layer processing on the Ethernet packet from the third Ethernet controller and send the processed Ethernet packet to the fourth physical-layer module, perform physical-layer processing on the Ethernet packet from the fourth physical-layer module and send the processed Ethernet packet to the third Ethernet controller.

The fourth physical-layer module is configured to perform physical-layer processing on the Ethernet packet from the third physical-layer module and send the processed Ethernet packet to the fourth Ethernet controller, perform physical-layer processing on the Ethernet packet from the fourth Ethernet controller and send the processed Ethernet packet to the third physical-layer module.

The fourth Ethernet controller is configured to send the Ethernet packet from the fourth physical-layer module to the second adaptation unit, and send an Ethernet packet from the second adaptation unit to the fourth physical-layer module.

The second adaptation unit is configured to convert parallel management information from the processor of the IAC into an Ethernet packet and send the Ethernet packet to the fourth Ethernet controller, convert the Ethernet packet received from the fourth Ethernet controller into parallel management information and send the parallel management information to the processor of the IAC.

It should be noted that, in the Method 3, the third Ethernet controller or the fourth Ethernet controller in the management interface may be the newly-added Ethernet controller for implementing the management interface. Alternatively, if the data interface and the status information interface include the Ethernet controller, the third Ethernet controller and the fourth Ethernet controller may be the Ethernet controller included in the data interface or the status information interface, i.e., the third Ethernet controller or the fourth Ethernet controller is multiplexed with the Ethernet controller included in the data interface or the status information interface.

It should also be noted that the serial interface in the embodiments of the present invention may be a Universal Asynchronous Receiver/Transmitter (UART).

In the above three implementation methods of the management interface, the implementation on the NFC side is completely the same as that on the IAC side. For example, if the management interface in the NFC is implemented by the serial interface in the Method 1, the management interface in the IAC is also implemented by adopting the serial interface in the Method 1. If the management interface in the NFC is implemented by using the Method 2, then the management interface in the IAC is also implemented by using the Method 2. In practical service implementations, since in both the Method 1 and the Method 2, the NFC is finally connected with the IAC through the serial interface, the implementation method of the management interface in the NFC may be different from that in the IAC. For example, the management interface in the NFC is implemented by using the Method 1 and the management interface is implemented by using the Method 2; or, the management interface in the NFC is implemented by using the Method 2 and the management interface is implemented by using the Method 1.

Finally, as to the status information interface:

The status information interface between the NFC and the IAC is mainly responsible for transmitting advanced status protocol control information between the NFC and the IAC. And the status information interface is generally used for transmitting the status information after a data interface communication is established between the NFC and the IAC. For example, the status information interface is used for transmitting information representing the current status of the NFC and the IAC after the data interface connection and the management interface connection are established between the NFC and the IAC. Specifically, the status information may be any one or any combination of a heartbeat detection packet, a clock synchronization packet, a board restarting notification packet and a system initial value packet.

For example, after the data interface connection and the management interface connection are established between the NFC and the IAC, in order to detect whether the IAC is in a normal state, the NFC needs to perform heartbeat detection on the IAC. There are several methods to perform the heartbeat detection. For example, a packet format and an interval of a heartbeat detection packet which indicates that the IAC is normal are negotiated in advance by the NFC and the IAC. The IAC sends the heartbeat detection packet according to the pre-negotiated interval through the status information interface. If the NFC receives the heartbeat detection packet through the status information interface within the pre-negotiated interval, it is determined that the IAC is normal; otherwise, it is determined that the IAC is abnormal. If the IAC is abnormal, corresponding operation is performed according to a pre-set indication, e.g., an alarm is sent. For another example, before the data interaction between the NFC and the IAC, it is required to ensure the clock synchronization between the NFC and the IAC. In order to ensure the clock synchronization between the NFC and the IAC, the clock synchronization between the NFC and the IAC is performed through the status information interface, i.e., the NFC sends to the IAC through the status information interface a clock synchronization packet which is negotiated in advance. The IAC receives the clock synchronization packet through the status information interface and synchronizes a local clock according to the current time of the NFC which is carried in the clock synchronization packet.

Still anther example, after being restarted, the IAC sends a pre-negotiated restarting packet to the NFC through the status information interface. The NFC sends to the IAC through the status information interface a system initial value which is necessary for the IAC after the restart. The IAC configures the system initial value after being restarted.

In the embodiments of the present invention, the status information interface may be implemented by a customized interface. Preferably, the status information interface may be implemented by the Ethernet interface.

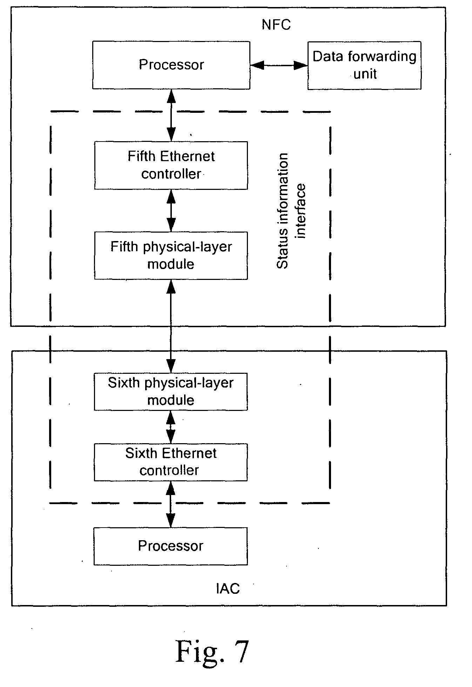

Fig.7 is a schematic diagram illustrating an embodiment of the present invention wherein the status information interface is implemented by the Ethernet interface. As shown in Figs.2 and 7, in embodiments of the present invention, when being implemented by the Ethernet interface, the status information interface between the NFC and the IAC includes: a fifth Ethernet controller and a fifth physical-layer module, both of which are integrated in the NFC, a sixth Ethernet controller and a sixth physical-layer module, both of which are integrated in the IAC.

The fifth Ethernet controller is configured to receive status information from the processor of the NFC, convert the status information into Ethernet interface data and send the Ethernet interface data to the fifth physical-layer module, convert Ethernet interface data from the fifth physical-layer module into processor-side status information and send the processor-side status information to the processor of the NFC.

The fifth physical-layer module is configured to perform physical-layer processing on the Ethernet interface data from the fifth Ethernet controller and send the processed Ethernet interface data to the sixth physical-layer module; perform physical-layer processing on the Ethernet interface data from the sixth physical-layer module and send the processed Ethernet interface data to the fifth Ethernet controller.

The sixth physical-layer module is configured to perform physical-layer processing on the Ethernet interface data from the fifth physical-layer module and send the processed Ethernet interface data to the fifth Ethernet controller; perform physical-layer processing on the Ethernet interface data from the sixth Ethernet controller and send the processed Ethernet data to the fifth physical-layer module.

The sixth Ethernet controller is configured to receive the Ethernet interface data from the sixth physical-layer module, convert the Ethernet interface data into processor-side status information and send the processor-side status information to the processor of the IAC, convert status information from the processor of the IAC into Ethernet interface data and send the Ethernet interface data to the sixth physical-layer module.

In the status information interface of the IAC, the sixth Ethernet controller may be integrated in the processor of the IAC, or be connected with the processor of the IAC through the PCI, PCI-X or PCI Express bus of the processor of the IAC.

Referring to Fig.7, in the NFC, the fifth physical-layer module may be independent from the fifth Ethernet controller, i.e., they are two independent parts. Alternatively, the fifth physical-layer module may be integrated in the fifth Ethernet controller. Similarly, the sixth physical module may also be independent from the sixth Ethernet controller, i.e., they are two independent parts. Or, the sixth physical-layer module may also be integrated in the sixth Ethernet controller.

In the status information interface, the fifth Ethernet controller or the sixth Ethernet controller may be the newly-added Ethernet controller for implementing the status information interface. Or, if the data interface or the management interface includes the Ethernet controller, the fifth Ethernet controller or the sixth Ethernet controller may also be the Ethernet controller included in the data interface or the management interface, i.e., multiplexed with the Ethernet controller included in the data interface or the management interface.

Accordingly, the embodiments of the present invention provide a NFC. The NFC includes: a data forwarding unit, a processor, a data interface on the NFC side, a management interface on the NFC side and a status information interface on the NFC side.

The data interface on the NFC side is configured to send data from the data forwarding unit of the NFC to the IAC, and send data from the IAC to the data forwarding unit of the NFC.

The management interface on the NFC side is configured to send the management information from the processor of the NFC to the IAC, and send the management information from the IAC to the processor of the NFC.

The status information interface on the NFC side is configured to send the status information from the processor of the NFC to the IAC, and send the status information from the IAC to the processor of the NFC.

Similar to the implementation of the NFC in the system provided by the embodiments of the present invention, the data interface on the NFC side includes: a first Ethernet controller and a first physical-layer module.

The first Ethernet controller is configured to received the data from the data forwarding unit of the NFC, convert the data into Ethernet interface data and send the Ethernet interface data to the first physical-layer module, convert Ethernet interface data from the first physical-layer module into processor-side data and send the processor-side data to the data forwarding unit of the NFC.

The first physical-layer module is configured to perform physical-layer processing on the Ethernet interface data from the first Ethernet controller, and send the processed Ethernet interface data to the IAC, perform physical-layer processing on Ethernet interface data from the IAC and send the processed Ethernet interface data to the first Ethernet controller.

In the NFC provided by the embodiments of the present invention, the first Ethernet controller is connected with the PCI, PCI-X or PCI Express bus of the processor of the NFC through the data forwarding unit.

Similar to the implementation of the NFC in the system provided by the embodiments of the present invention, the management interface on the NFC side has three implementation methods.

Method A1: the management interface on the NFC side includes a first serial interface, configured to convert parallel management information from the processor of the NFC into serial management information and send the serial management information to the IAC, convert serial management information from the IAC into parallel management information and send the parallel management information to the processor of the NFC.

Method B1: the management interface on the NFC side includes: a third Ethernet controller, a third physical-layer module and a first adaptation unit, the three of which simulate the serial interface.

The first adaptation unit is configured to convert parallel management information from the processor of the NFC into an Ethernet packet and send the Ethernet packet to the third Ethernet controller; convert an Ethernet packet from the third Ethernet controller into parallel management information and send the parallel management information to the processor of the NFC.

The third Ethernet controller is configured to send the Ethernet packet from the first adaptation unit to the third physical-layer module, and send an Ethernet packet from the third physical-layer module to the first adaptation unit.

The third physical-layer module is configured to perform physical-layer processing on the Ethernet packet from the third Ethernet controller and send the processed Ethernet packet to the IAC, perform physical-layer processing on the Ethernet packet from the IAC and send the processed Ethernet packet to the third Ethernet controller.

Method C1: the management interface on the NFC side includes a first serial interface and an Ethernet controller connected with the first serial interface, wherein the first serial interface is connected with the processor of the NFC through the Ethernet controller.

The processor is configured to send parallel management information to the first serial interface through the Ethernet controller connected with the first serial interface, and receive parallel management information from the first serial interface through the Ethernet controller connected with first serial interface.

Similar to the implementation of the NFC in the system provided by the embodiments of the present invention, the status information interface on the NFC side includes a fifth Ethernet controller and a fifth physical-layer module.

The fifth Ethernet controller is configured to receive status information from the processor of the NFC, convert the status information into Ethernet interface data and send the Ethernet interface data to the fifth physical-layer module, convert Ethernet interface data from the fifth physical-layer module into processor-side status information and send the processor-side status information to the processor of the NFC.

The fifth physical-layer module is configured to perform physical-layer processing on the Ethernet interface data from the fifth Ethernet controller and send the processed Ethernet interface data to the IAC, perform physical-layer processing on Ethernet interface data from the IAC and send the processed Ethernet interface data to the fifth Ethernet controller.

Accordingly, the embodiments of the present invention provide an IAC. The IAC includes: a data interface on the IAC side, a management interface on the IAC side and a status information interface on the IAC side.

The data interface on the IAC side is configured to send data from the processor of the IAC to the NFC, and send the data from the NFC to the processor of the IAC.

The management interface on the IAC side is configured to send management information from the processor of the IAC to the NFC, and send management information from the NFC to the processor of the IAC.

The status information interface on the IAC side is configured to send status information from the processor of the IAC to the NFC, and send status information from the NFC to the processor of the IAC.

Similar to the implementation of the IAC in the system provided by the embodiments of the present invention, the data interface on the IAC side includes a third Ethernet controller and a third physical-layer module.

The third Ethernet controller is configured to receive the data from the processor of the IAC, convert the data into Ethernet interface data and send the Ethernet interface data to the third physical-layer module; convert Ethernet interface data from the third physical-layer module into processor-side data and send the processor-side data to the processor of the IAC.

The third physical-layer module is configured to perform physical-layer processing on the Ethernet interface data from the third Ethernet controller and send the processed Ethernet interface data to the NFC, perform physical-layer processing on the Ethernet interface data from the NFC and send the processed Ethernet interface data to the third Ethernet controller.

Similar to the implementation of the IAC in the system provided by the embodiments of the present invention, the management interface on the IAC side has three implementation methods:

Method A2: the management interface on the IAC side includes a second serial interface, configured to convert the parallel management information from the processor of the IAC into serial management information and send the serial management information to the NFC, convert the serial management information from the NFC into parallel management information and sends the parallel management information to the processor of the IAC.

Method B2: the management interface on the IAC side includes a second serial interface and an Ethernet controller connected with the second serial interface, and the second serial interface is connected with processor of the IAC through the Ethernet controller.

The processor is configured to send the parallel management information to the second serial interface through the Ethernet controller connected with the second serial interface, and receive the parallel management information from the second serial interface through the Ethernet controller.

Method C2: the management interface on the IAC side includes: a fourth Ethernet controller, a fourth physical-layer module and a second adaptation unit, the three of which simulate the serial interface.

The second adaptation unit is configured to convert the parallel management information from the processor of the IAC into an Ethernet packet and send the Ethernet packet to the fourth Ethernet controller, convert an Ethernet packet from the fourth Ethernet controller into parallel management information and send the parallel management information to the processor of the IAC.

The fourth Ethernet controller is configured to send the Ethernet packet from the second adaptation unit to the fourth physical-layer module, and send an Ethernet packet from the fourth physical-layer module to the second adaptation unit.

The fourth physical-layer module is configured to perform physical-layer processing on the Ethernet packet from the fourth Ethernet controller and send the processed Ethernet packet to the NFC, perform physical-layer processing on an Ethernet packet from the NFC and send the processed Ethernet packet to the fourth Ethernet controller.

Similar to the implementation of the IAC in the system provided by the embodiments of the present invention, the status information interface on the IAC side includes a sixth Ethernet controller and a sixth physical-layer module.

The sixth Ethernet controller is configured to receive the status information from the processor of the IAC, convert the status information into Ethernet interface data and send the Ethernet interface data to the sixth physical-layer module, convert Ethernet interface data from the sixth physical-layer module into processor-side status information and send the processor-side status information to the processor of the IAC.

The sixth physical-layer module is configured to perform physical-layer processing on the Ethernet interface data from the sixth Ethernet controller and send the processed Ethernet interface data to the NFC, perform physical-layer processing on the Ethernet interface data from the NFC and send the processed Ethernet interface data to the sixth Ethernet controller.

In the IAC provided by the embodiments of the present invention, the mentioned Ethernet controllers may be integrated in the processor of the IAC, or be connected respectively with the processor of the IAC through the PCI, PCI-X or PCI Express bus of the processor of the IAC.

It should be noted that, in the embodiments of the present invention, when the Ethernet interface, i.e., the Ethernet controller and the physical-layer module, is adopted in any one of the data interface, management interface and the status information interface, the Ethernet interface may be one or multiple bundles of 10GE Ethernet, or one or multiple bundles of 10M, 100M or 1000M Ethernet. The mentioned physical-layer modules may be implemented by existing physical-layer module chips, such as BCM5461S and BCM5464SR produced by Broadcom, 88E1145 produced by Marvell, etc. In addition, the physical-layer processing on the Ethernet interface data performed by each physical-layer module in the embodiments of the present invention is same as the physical-layer processing performed by a physical-layer module in the Ethernet interface in the prior art.

## Claims

1. A system for connecting different components, comprising: a Network Forwarding Component NFC, an Independent Application Component IAC and an interface linkage component, the three of which are integrated in one network device; wherein the NFC comprises a data forwarding unit and a processor, the IAC comprises a processor; the interface linkage component comprises a data interface, a management interface and a status information interface;
the data interface is configured to send data from the data forwarding unit of the NFC to the processor of the IAC, and send data from the processor of the IAC to the data forwarding unit of the NFC;
the management interface is configured to send management information from the processor of the NFC to the processor of the IAC, and send management information from the processor of the IAC to the processor of the NFC;
the status information interface is configured to send status information from the processor of the NFC to the processor of the IAC, and send status information from the processor of the IAC to the processor of the NFC.

2. The system of claim 1, wherein the data interface comprises: a first Ethernet controller and a first physical-layer module both of which are integrated in the NFC, a second Ethernet controller and a second physical-layer module both of which are integrated in the IAC; wherein
the first Ethernet controller is configured to receive data from the data forwarding unit of the NFC, convert the data into Ethernet interface data and send the Ethernet interface data to the first physical-layer module, convert Ethernet interface data from the first physical-layer module into processor-side data and send the processor-side data to the data forwarding unit of the NFC;
the first physical-layer module is configured to perform physical-layer processing on the Ethernet interface data from the first Ethernet controller and send the processed Ethernet interface data to the second physical-layer module; perform physical-layer processing on Ethernet interface data from the second physical-layer module and send the processed Ethernet interface data to the first Ethernet controller;
the second physical-layer module is configured to perform physical-layer processing on the Ethernet interface data from the first physical-layer module and send the processed Ethernet interface data to the second Ethernet controller; perform physical-layer processing on Ethernet interface data from the second Ethernet controller and send the processed Ethernet interface data to the first physical-layer module;
the second Ethernet controller is configured to convert the Ethernet interface data from the second physical-layer module into processor-side data and send the processor-side data to the processor of the IAC, convert the data from the processor of the IAC into Ethernet interface data and send the Ethernet interface data to the second physical-layer module.

3. The system of claim 1, wherein the management interface comprises a first serial interface integrated in the NFC and a second serial interface integrated in the IAC; wherein
the first serial interface is configured to convert parallel management information from the processor of the NFC into serial management information and send the serial management information to the second serial interface, convert serial management information from the second serial interface into parallel management information and send the parallel management information to the processor of the NFC;
the second serial interface is configured to convert parallel management information from the processor of the IAC into the serial management information and send the serial management information to the first serial interface, convert the serial management information from the first serial interface into parallel management information and send the parallel management information to the processor of the IAC.

4. The system of claim 3, wherein the serial interface is independent from the processor to which the serial interface is connected; and
the serial interface is connected with the processor through a Local Bus of the processor, receives parallel management information from the processor and send parallel management information to the processor through the Local Bus.

5. The system of claim 3, wherein the serial interface is independent from the processor to which the serial interface is connected;
the serial interface is connected with the a PCI, PCI-X or PCI Express bus of the processor through a conversion unit; and
the conversion unit is configured to receive the parallel management information from the processor through the PCI, PCI-X or PCI Express bus, convert the format of the parallel management information into a Local Bus format and send the converted parallel management information to the serial interface; convert the format of parallel management information in the Local Bus format from the serial interface into the PCI, PCI-X or PCI Express format and send the converted parallel management information to the PCI, PCI-X or PCI Express bus of the processor.

6. The system of claim 3, wherein the serial interface is independent from the processor to which the serial interface is connected, and the system further comprises an Ethernet controller between the serial interface and the processor, wherein the serial interface is connected with the processor through the Ethernet controller; and
the processor is configured to send the parallel management information to the serial interface through the Ethernet controller connected with the serial interface, and receive the parallel management information from the serial interface through the Ethernet controller connected with the serial interface.

7. The system of claim 6, wherein the serial interface is connected with the Ethernet controller through a logic circuit.

8. The system of claim 7, wherein one of the serial interface and the Ethernet controller connected with the serial interface adopts a data/address bus multiplex structure; the other adopts a data/address bus separation structure; and the logic circuit is a multiplexer.

9. The system of claim 6, wherein the Ethernet controller connected with the serial interface is one of: an Ethernet controller in the data interface, an Ethernet controller in the status information interface and a newly-added Ethernet controller.

10. The system of claim 9, wherein the Ethernet controller connected with the serial interface is the Ethernet controller in the data interface or the status information interface;
the processor is further configured to allocate different address spaces for the serial interface and the Ethernet controller in the Ethernet controller connected with the serial interface, receive and send the data corresponding to the Ethernet controller through the address space allocated for the Ethernet controller, receive and send the parallel management information corresponding to the serial interface through the address space allocated to the serial interface;
the serial interface is configured to receive and send the parallel management information through the address space allocated for the serial interface in the Ethernet controller connected with the serial interface;
the Ethernet controller connected with the serial interface is configured to forward the parallel management information between the processor of the NFC and the serial interface through the address space allocated for the serial interface in the Ethernet controller.

11. The system of claim 1 or 2, wherein the management interface comprises: a third Ethernet controller, a third physical-layer module, a first adaptation unit, the three of which are integrated in the NFC and simulate the serial interface; a fourth Ethernet controller, a fourth physical-layer module and a second adaptation unit, the three of which are integrated in the IAC and simulate the serial interface;
the first adaptation unit is configured to convert parallel management information from the processor of the NFC into an Ethernet packet and send the Ethernet packet to the third Ethernet controller, convert an Ethernet packet from the third Ethernet controller into parallel management information and send the parallel management information to the processor of the NFC;
the third Ethernet controller is configured to send the Ethernet packet from the first adaptation unit to the third physical-layer module, and send an Ethernet packet from the third physical-layer module to the first adaptation unit;
the third physical-layer module is configured to perform physical-layer processing on the Ethernet packet from the third Ethernet controller and send the processed Ethernet packet to the fourth physical-layer module, perform physical-layer processing on the Ethernet packet from the fourth physical-layer module and send the processed Ethernet packet to the third Ethernet controller;
the fourth physical-layer module is configured to perform physical-layer processing on the Ethernet packet from the third physical-layer module and send the processed Ethernet packet to the fourth Ethernet controller, perform physical-layer processing on the Ethernet packet from the fourth Ethernet controller and send the processed Ethernet packet to the third physical-layer module;
the fourth Ethernet controller is configured to send the Ethernet packet from the fourth physical-layer module to the second adaptation unit, and send an Ethernet packet from the second adaptation unit to the fourth physical-layer module;
the second adaptation unit is configured to convert parallel management information from the processor of the IAC into the Ethernet packet and send the Ethernet packet to the fourth Ethernet controller, convert the Ethernet packet from the fourth Ethernet controller into parallel management information and send the parallel management information to the processor of the IAC.

12. The system of claim 11, wherein the data interface comprises a first Ethernet controller and a first physical-layer module both of which are integrated in the NFC, a second Ethernet controller and a second physical-layer module both of which are integrated in the IAC;
the third Ethernet controller and the first Ethernet controller are integrated together or independent from each other;
the fourth Ethernet controller and the second Ethernet controller are integrated together or independent from each other.

13. The system of claim 1 or 2, wherein the status information interface includes a fifth Ethernet controller and a fifth physical-layer module both of which are integrated in the NFC, a sixth Ethernet controller and a sixth physical-layer module both of which are integrated in the IAC; wherein
the fifth Ethernet controller is configured to receive status information from the processor of the NFC, convert the status information into Ethernet interface data and send the Ethernet interface data to the fifth physical-layer module, convert Ethernet interface data from the fifth physical-layer module into processor-side status information and send the processor-side status information to the processor of the NFC;
the fifth physical-layer module is configured to perform physical-layer processing on the Ethernet interface data from the fifth Ethernet controller and send the processed Ethernet interface data to the sixth physical-layer module, perform physical-layer processing on Ethernet interface data from the sixth physical-layer module and send the processed Ethernet interface data to the fifth Ethernet controller;
the sixth physical-layer module is configured to perform physical-layer processing on the Ethernet interface data from the fifth physical-layer module and send the processed Ethernet interface data to the sixth Ethernet controller, perform physical-layer processing on Ethernet interface data from the sixth Ethernet controller and send the processed Ethernet interface data to the fifth physical-layer module;
the sixth Ethernet controller is configured to receive the Ethernet interface data from the sixth physical-layer module, convert the Ethernet interface data into processor-side status information and send the processor-side status information to the processor of the IAC, convert processor-side status information from the processor of the IAC into Ethernet interface data and send the Ethernet interface data to the sixth physical-layer module.

14. The system of claim 13, wherein the sixth Ethernet controller is integrated in the processor of the IAC, or connected with the processor of the IAC through the PCI, PCI-X or PCI Express bus of the processor of the IAC.

15. The system of claim 13, wherein data interface includes a first Ethernet controller and a first physical-layer module both of which are integrated in the NFC, a second Ethernet controller and a second physical-layer module both of which are integrated in the IAC;
the fifth Ethernet controller and the first Ethernet controller are integrated together or independent from each other;
the sixth Ethernet controller and the second Ethernet controller are integrated together or independent from each other.

16. The system of claim 13, wherein the fifth Ethernet controller, the fifth physical-layer module, the sixth physical-layer module and the sixth Ethernet controller exchange status information between each other; and the status information comprises any one or any combination of: a heartbeat detection packet, a clock synchronization packet, a board restarting notification packet and a system initial value packet.

17. A Network Forwarding Component NFC, comprising: a data forwarding unit, a processor, a data interface on the NFC side, a management interface on the NFC side and a status information interface on the NFC side; wherein
the data interface on the NFC side is configured to send data from the data forwarding unit of the NFC to an Independent Application Component IAC, and send data from the IAC to the data forwarding unit of the NFC;
the management interface on the NFC side is configured to send management information from the processor of the NFC to the IAC, and send management information from the IAC to the processor of the NFC;
the status information interface on the NFC side is configured to send status information from the processor of the NFC to the IAC, and send status information from the IAC to the processor of the NFC.

18. The NFC of claim 17, wherein the data interface on the NFC side comprises: a first Ethernet controller and a first physical-layer module; wherein
the first Ethernet controller is configured to receive the data from the data forwarding unit of the NFC, convert the data into Ethernet interface data and send the Ethernet interface data to the first physical-layer module, convert Ethernet interface data from the first physical-layer module into processor-side data and send the processor-side data to the data forwarding unit of the NFC;
the first physical-layer module is configured to perform physical-layer processing on the Ethernet interface data from the first Ethernet controller and send the processed Ethernet interface data to the IAC, perform physical-layer processing on Ethernet interface data from the IAC and send the processed Ethernet interface data to the first Ethernet controller.

19. The NFC of claim 18, wherein the first Ethernet controller is connected with the processor of the NFC through a PCI, PCI-X or PCI Express bus of the processor of the NFC.

20. The NFC of claim 17, wherein the management interface on the NFC side comprises a first serial interface, configured to convert parallel management information from the processor of the NFC into serial management information and send the serial management information to the IAC, convert serial management information from the IAC into parallel management information and send the parallel management information to the processor of the NFC.

21. The NFC of claim 17, wherein the management interface on the NFC side comprises: a third Ethernet controller, a third physical-layer module and a first adaptation unit, the three of which simulate a serial interface; wherein
the first adaptation unit is configured to convert parallel management information from the processor of the NFC into an Ethernet packet and send the Ethernet packet to the third Ethernet controller, convert an Ethernet packet from the third Ethernet controller into parallel management information and send the parallel management information to the processor of the NFC;
the third Ethernet controller is configured to send the Ethernet packet from the first adaptation unit to the third physical-layer module, and send an Ethernet packet from the third physical-layer module to the first adaptation unit;
the third physical-layer module is configured to perform physical-layer processing on the Ethernet packet from the third Ethernet controller and send the processed Ethernet packet to the IAC, perform physical-layer processing on an Ethernet packet from the IAC and send the processed Ethernet packet to the third Ethernet controller.

22. The NFC of claim 17, wherein the management interface on the NFC side comprises: a first serial interface and an Ethernet controller connected with the first serial interface, the first serial interface is connected with the process through the Ethernet controller, and
the processor is configured to send parallel management information to the first serial interface through the Ethernet controller connected with the first serial interface, and receive parallel management information from the first serial interface through the Ethernet controller connected with the first serial interface.

23. The NFC of claim 17, wherein the status information interface on the NFC side comprises: a fifth Ethernet controller and a fifth physical-layer module; wherein
the fifth Ethernet controller is configured to receive status information from the processor of the NFC, convert the status information into Ethernet interface data and send the Ethernet interface data to the fifth physical-layer module, convert Ethernet interface data from the fifth physical-layer module into processor-side status information and send the processor-side status information to the processor of the NFC;
the fifth physical-layer module is configured to perform physical-layer processing on the Ethernet interface data from the fifth Ethernet controller and send the processed Ethernet interface data to the IAC, perform physical-layer processing on Ethernet interface data from the IAC and send the processed Ethernet interface data to the fifth Ethernet controller.

24. An Independent Application Component IAC, comprising: a processor, a data interface on the IAC side, a management interface on the IAC side and a status information interface on the IAC side; wherein
the data interface on the IAC side is configured to send data from the processor of the IAC to a Network Forwarding Component NFC, and send data from the NFC to the processor of the IAC;
the management interface on the IAC side is configured to send management information from the processor of the IAC to the NFC, and send management information from the NFC to the processor of the IAC;
the status information interface on the IAC side is configured to send status information from the processor of the IAC to the NFC, and send status information from the NFC to the processor of the IAC.

25. The IAC of claim 24, wherein the data interface on the IAC side comprises a third Ethernet controller and a third physical-layer module; wherein
the third Ethernet controller is configured to receive the data from the processor of the IAC, convert the data into Ethernet interface data and send the Ethernet interface data to the third physical-layer module, convert Ethernet interface data from the third physical-layer module into processor-side data and send the processor-side data to the processor of the IAC;
the third physical-layer module is configured to perform physical-layer processing on the Ethernet interface data from the third Ethernet controller and send the processed Ethernet interface data to the NFC, perform physical-layer processing on Ethernet interface data from the NFC and send the processed Ethernet interface data to the third Ethernet controller.

26. The IAC of claim 24, wherein the management interface on the IAC side comprises a second serial interface, configured to convert the parallel management information from the processor of the IAC to serial management information and send the serial management information to the NFC, convert the serial management information from the NFC into parallel management information and send the parallel management information to the processor of the IAC.

27. The IAC of claim 24, wherein the management interface on the IAC side comprises a second serial interface and an Ethernet controller connected with the second serial interface, the second serial interface is connected with the processor through the Ethernet controller, and
the processor is configured to send the parallel management information to the second serial interface through the Ethernet controller connected with the second serial interface, and receive the parallel management information from the second serial interface through the Ethernet controller.

28. The IAC of claim 24, wherein the management interface on the IAC side comprises: a fourth Ethernet controller, a fourth physical-layer module and a second adaptation unit, the three of which simulate a serial interface; wherein
the second adaptation unit is configured to convert the parallel management information from the processor of the IAC into an Ethernet packet and send the Ethernet packet to the fourth Ethernet controller, convert an Ethernet packet from the fourth Ethernet controller into parallel management information and send the parallel management information to the processor of the IAC;
the fourth Ethernet controller is configured to send the Ethernet packet from the second adaptation unit to the fourth physical-layer module, and send an Ethernet packet from the fourth physical-layer module to the second adaptation unit;
the fourth physical-layer module is configured to perform physical-layer processing on the Ethernet packet from the fourth Ethernet controller and send the processed Ethernet packet to the NFC, perform physical-layer processing on an Ethernet packet from the NFC and send the processed Ethernet packet to the fourth physical-layer module.

29. The IAC of claim 24, wherein the status information interface on the IAC side comprises: a sixth Ethernet controller and a sixth physical-layer module; wherein
the sixth Ethernet controller is configured to receive the status information from the processor of the IAC, convert the status information into Ethernet interface data and send the Ethernet interface data to the sixth physical-layer module, convert Ethernet interface data from the sixth physical-layer data into processor-side status information and send the processor-side status information to the processor of the IAC;
the sixth physical-layer module is configured to perform physical-layer processing on the Ethernet interface data from the sixth Ethernet controller and send the processed Ethernet interface data to the NFC, perform physical-layer processing on Ethernet interface data from the NFC and send the processed Ethernet interface data to the sixth Ethernet controller.

30. The IAC of claim 25, 27, 28 or 29, wherein the Ethernet controller is integrated in the processor of the IAC, or connected with the processor of the IAC through a PCI, PCI-X or PCI Express bus of the processor of the IAC.
